# FASCICULE DE BREVET EUROPEEN

(11) **EP 1 284 932 B1**
(45) Date de publication et mention de la délivrance du brevet: **26.11.2003**
(21) Numéro de dépôt: 01934101.5
(22) Date de dépôt: 11.05.2001
(51) Int. Cl.: C02F 1/463, C02F 9/00

(54) **PROCEDE DE TRAITEMENT D'UN EFFLUENT CONTENANT NOTAMMENT DE L'AZOTE ET/OU DU PHOSPHORE ET/OU DES MATIERES ORGANIQUES ET/OU DES METAUX LOURDS**
VERFAHREN ZUR BEHANDLUNG VON STICKSTOFF- UND/ODER PHOSPHOR- UND/ODER ORGANISCHEN STOFFEN- UND/ODER SCHWERMETALLE ENHALTENDEM ABWASSER
METHOD FOR TREATING AN EFFLUENT CONTAINING IN PARTICULAR NITROGEN AND/OR PHOSPHORUS AND/OR ORGANIC MATTER AND/OR HEAVY METALS

(30) Priorité: 12.05.2000 FR 0006084
(43) Date de publication de la demande: 26.02.2003
(73) Titulaire: Ecopsi, 62000 Arras (FR)
(72) Inventeur: TIERNY, Jean-Benoît, F-62000 Arras (FR)
(74) Mandataire: Hennion, Jean-Claude
(86) Numéro de dépôt international: FR0101438
(87) Numéro de publication internationale: WO01085617

(56) Documents cités:
- EP-A- 0 251 221
- EP-A- 0 351 922
- FR-A- 2 173 283
- FR-A- 2 431 462
- FR-A- 2 663 018

## Description

La présente invention concerne un procédé de traitement d'un effluent liquide contenant entre autres de l'azote et/ou du phosphore et/ou des matières organiques et/ou des métaux lourds.

Les effluents du type précité sont des effluents provenant de déchets organiques tels que, par exemple, les moûts de fermentation, notamment les moûts provenant de la production industrielle de levures ou d'enzymes, les boues de station d'épuration, l'eau utilisée pour des traitements de surface tel que le laminage à froid et qui est, après utilisation, chargée en métaux ou encore les effluents d'élevage et notamment les excréments des animaux.

Selon leur nature, ces effluents sont traités de diverses manières en sorte de pouvoir être rejetés dans le milieu naturel avec un minimum de risques de pollution ou de nuisances. Néanmoins, certains traitements ne sont pas satisfaisants en ce qu'ils ne permettent pas une valorisation suffisante des produits issus de l'effluent traité ou en ce qu'ils ne permettent pas une valorisation sans nuisances de ces produits.

A titre d'exemple explicatif, le cas du traitement du lisier va être plus amplement décrit ci-dessous.

Dans la plupart des élevages porcins, les animaux sont placés sur des caillebotis au dessus de grandes fosses destinées à recevoir leurs excréments. Ces fosses ne sont vidées qu'une ou deux fois par an ce qui non seulement provoque des nuisances olfactives pour l'entourage de l'élevage mais peut également s'avérer dangereux pour les animaux et même pour le personnel de l'exploitation, la présence du lisier favorisant le développement des bactéries et autres et donc la prolifération des maladies.

Le traitement du lisier peut se faire par voie biologique ou physico-chimique.

Il existe à l'heure actuelle plusieurs types de traitement physico-chimique du lisier récupéré dans les fosses.

Selon un premier type de traitement qui est succinctement décrit, sous l'appellation de "Balcopure", dans le numéro 328 de "Porc Magazine", publié en décembre 1999, le lisier est mélangé à de la chaux et l'ammoniac ainsi formé est entraîné à l'air. D'un point de vue nuisance olfactive, ce traitement ne permet de supprimer que les odeurs dues à la présence d'ammoniac. Il n'a en particulier qu'une action limitée et secondaire sur les acides gras volatils, les mercaptans et le sulfure d'hydrogène qui sont présents dans le lisier ou générés lors de la fermentation de ce dernier et qui représentent tous une source importante de nuisances. De plus, la pollution organique encore présente dans le lisier traité ne permet pas son rejet dans le milieu naturel. Le lisier traité doit donc être mis en lagune et soumis à l'action des bactéries avant d'être épandu ou rejeté ce qui provoque d'importantes nuisances olfactives.

Selon un second type de traitement, la phase solide et la phase liquide du lisier sont séparées et l'on ajoute un floculant chimique à la phase liquide. Les odeurs de fermentation du lisier sont masquées par ajout de produits spécifiques. De même, la pollution encore contenue dans le lisier traité ne permet pas son rejet dans le milieu naturel et une étape de mise en lagune est donc également nécessaire.

Selon un troisième type de traitement, on sépare les phases liquide et solide du lisier et l'on effectue une électrofloculation de la phase liquide. Ce type de traitement a notamment été décrit dans le numéro 45 du magazine "Réussir Porcs" publié en décembre 1998. L'efficacité de ce traitement qui se mesure par la pollution résiduelle du lisier traité dépend fortement de la composition du lisier et n'est donc ni reproductible ni fiable.

Selon un autre type de traitement décrit dans le document FR 2 431 462, le lisier est soumis à une étape de digestion anaérobie, on ajoute ensuite de la chaux et un agent coagulant pour former lors d'une étape d'électroflottation des flocs que l'on sépare de la phase liquide. L'oxydation de l'effluent est ensuite poursuivie par une étape d'oxydation catalytique du type ozonisation.

Le but de la présente invention est donc de proposer un procédé de traitement d'un effluent contenant entre autres de l'azote et/ou du phosphore et/ou des matières organiques et/ou des métaux lourds qui permet notamment le rejet sans nuisances ni pollution d'au moins une partie de l'effluent traité.

Un autre but de la présente invention est de proposer un procédé de traitement d'un effluent tel que précédemment décrit qui permet de contrôler dans une certaine mesure, la composition des produits issus du traitement.

Ce but est atteint au moyen d'un procédé d'épuration d'un effluent contenant notamment de l'azote et/ou du phosphore et/ou des matières organiques et/ou des métaux lourds qui de manière caractéristique comprend les étapes suivantes :
- on ajoute une base en sorte notamment de volatiliser au moins une partie de l'azote sous forme d'ammoniac gazeux et/ou de précipiter au moins une partie du phosphore et/ou au moins une partie des matières organiques ;
- on fait subir une électrofloculation au mélange ainsi obtenu ; et
- on sépare les flocs formés par électrofloculation et les boues éventuellement présentes de la phase liquide qui représente l'effluent épuré.

La phase liquide ainsi obtenue est de l'eau dont la pureté dépend de la composition de l'effluent de départ.

L'étape d'électrofloculation permet, du fait de la dissolution des électrodes, de former des flocs qui permettent eux-mêmes de favoriser la séparation des matières en suspension et des colloïdes résiduels. L'électrofloculation permet aussi de précipiter l'éventuel phosphore non précipité par ajout de chaux sous forme de phosphates et d'oxyder les matières organiques de l'effluent grâce à l'oxygène émis aux électrodes ; cette oxydation a pour conséquence la réduction des éventuelles nuisances olfactives et la décoloration de l'effluent.

De préférence, après l'ajout de base on élimine les boues qui ont éventuellement précipité. La précipitation ou non des boues dépend du pH du mélange de l'effluent et de la base et de la composition de l'effluent lui-même.

De préférence le pH du mélange a après un ajustage éventuel, une valeur qui est supérieure ou égale à 8,5 et inférieure à 9,5.

Par ailleurs, la Demanderesse a observé que l'azote précipité sous forme de boues a tendance à se dissoudre à nouveau dans la phase liquide. Le fait de retirer la phase solide constituée de boues permet de réduire la durée nécessaire à la volatilisation de l'azote ammoniacal contenu dans la phase liquide et d'obtenir une boue riche en azote qui peut éventuellement être valorisée en tant qu'engrais par simple épandage ; la stabilité biologique de la boue permettant un stockage en bout de champs sans générer de nuisances olfactives.

Avantageusement, afin de favoriser et d'accélérer la volatilisation de l'ammoniac, celui-ci est entraîné par un gaz, de préférence de l'air, et de préférence, après élimination des boues éventuellement formées par ajout de base ; l'élimination des boues permettant à la fois d'accélérer la volatilisation de l'ammoniac et de faciliter la mise en oeuvre de l'entraînement à l'air.

Afin d'éviter l'entraînement des mousses susceptibles de se former lors de l'étape de volatilisation de l'ammoniac, il est souhaitable de réaliser le cassage celles-ci de telle sorte qu'elles ne soient plus préjudiciables au bon fonctionnement des installations, ni susceptibles de pénétrer dans le système de neutralisation de l'ammoniac.

De préférence, la base utilisée est choisie parmi la chaux, la magnésie et un mélange de chaux et de magnésie. La chaux présente une propriété particulièrement intéressante que la Demanderesse a mise en évidence. En effet, la chaux permet non seulement de précipiter une partie de l'azote ammoniacal et du phosphore de l'effluent sous forme de sels de calcium, d'entraîner les matières en suspension (matières organiques insolubles) mais aussi et de façon surprenante, de précipiter sous forme de sels non identifiés une partie du potassium éventuellement contenu dans l'effluent. Jusqu'à présent seules des techniques membranaires coûteuses et difficiles à mettre en oeuvre permettaient de diminuer la teneur en potassium d'une solution. De plus, la chaux a une action bactéricide ce qui permet d'épandre le précipité obtenu sans danger notamment en ce qui concerne la prolifération des organismes et micro-organismes génétiquement modifiés dans le milieu naturel.

Selon une variante préférée de mise en oeuvre, l'ammoniac volatilisé est neutralisé par un acide. De préférence, cet acide est l'acide sulfurique qui réagit avec l'ammoniac en formant du sulfate d'ammonium utilisable comme engrais.

Selon un mode de réalisation préféré, on ajoute avant et/ou après et/ou lors de l'étape d'électrofloculation un agent adsorbant ce qui permet d'augmenter la pureté de l'effluent traité, d'améliorer sa couleur et de le désodoriser de manière plus complète. Cet agent adsorbant est, par exemple, le charbon actif.

Selon une variante, on ajoute un sel avant ou lors de l'étape d'électrofloculation. Ce sel réagit lors de l'étape d'électrofloculation pour former, par exemple, et de manière avantageuse dans le cas du chlorure de sodium, des hypochlorites qui présentent des propriétés bactéricides intéressantes, notamment pour assurer la stabilité bactériologique de l'effluent traité. Il est de plus à noter que les hypochlorites sont ensuite au moins partiellement volatilisés ce qui ne pose donc aucun problème pour le rejet de l'effluent traité dans le milieu naturel. Les ions chlorures participent également à l'oxydation des matières organiques lors de l'étape d'électrofloculation.

La présente invention sera mieux comprise et ses caractéristiques et avantages apparaîtront mieux à la lecture de la description qui suit et fait référence aux dessins annexés représentant un mode de réalisation préféré d'un dispositif permettant la mise en oeuvre d'une variante préférée du procédé de la présente invention présenté à titre d'exemples non limitatifs et sur lesquels :
- la figure 1 représente les étapes fondamentales du procédé de l'invention ;
- la figure 2 représente les différentes étapes d'une variante préférée de mise en oeuvre du procédé de l'invention appliquée à du lisier ; et
- la figure 3 représente un exemple de dispositif utilisable pour la mise en oeuvre de la variante préférée représentée sur la figure 2.

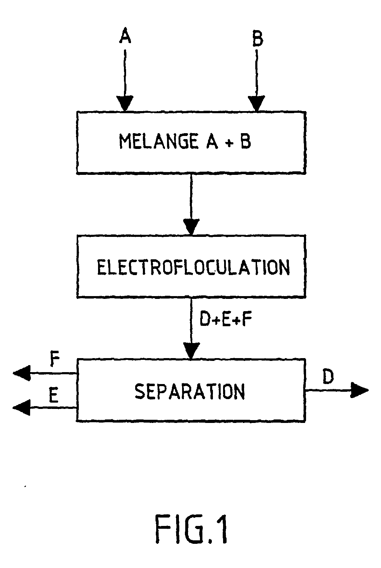

Les étapes fondamentales du procédé de l'invention vont maintenant être décrites en référence à la figure 1. L'effluent A est mélangé à une base B. Le mélange A + B ainsi obtenu est soumis à une électrofloculation. Après électrofloculation, on obtient une phase liquide D contenant éventuellement des boues E en suspension et des flocs F qui surnagent sur la phase liquide D. La séparation des boues E et des flocs F de la phase liquide permet d'obtenir un effluent épuré qui correspond à la phase liquide D précitée.

Le tableau I suivant regroupe les résultats concernant le traitement du concentré obtenu après nanofiltration de moûts de fermentation selon les étapes fondamentales du procédé de l'invention précédemment décrites.

**Tableau I**

| | |
|---|---|
| DCO du concentré avant traitement (mg O₂/l) | 150 000 |
| DCO après traitement (mg O₂/l) | 7 000 |
| azote global du concentré avant traitement (g/l) | 5,1 |
| azote global après traitement (g/l) | < 0,5 |
| matières en suspension du concentré avant traitement (mg/l) | 120 000 |
| matières en suspension après traitement (mg/l) | 50 |

L'azote total représente l'azote dit Kjeldahl (NR), l'azote sous forme oxydée et l'azote sous forme réduite.

On remarque donc que le procédé de l'invention appliqué au concentré issu de la nanofiltration d'un moût de fermentation permet d'éliminer 95% de la DCO du moût, 90% de l'azote global et plus de 99% des matières en suspension.

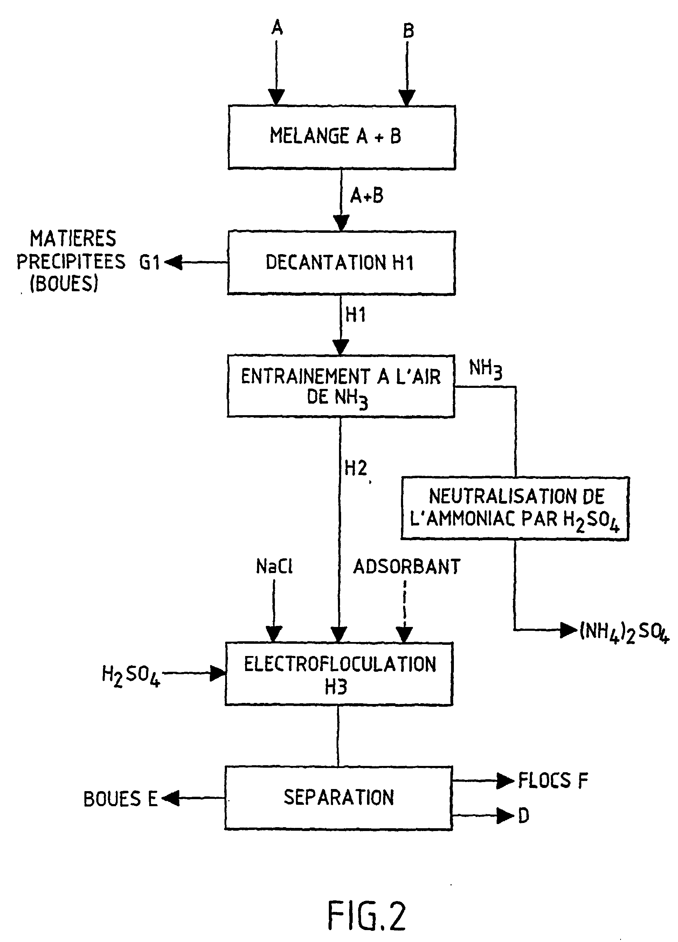

En référence à la figure 2, dans une variante préférée de mise en oeuvre du procédé de l'invention avantageusement appliquée à du lisier, le lisier A est mélangé à de la chaux B. Il est possible, selon le procédé de l'invention d'utiliser de la chaux vive ou éteinte. L'ajout de chaux provoque la précipitation sous forme de sels d'une partie de l'azote présent sous forme ammoniacal ainsi que la précipitation des matières organiques en suspension. Le phosphore précipite également sous la forme de sels de calcium et de façon surprenante le potassium forme également des sels qui précipitent. Toutes les matières précipitées forment des boues G1 qui dans la variante préférée de mise en oeuvre du procédé de l'invention sont séparées par décantation de la phase liquide H1, Simultanément, l'ajout de chaux étant suffisant pour augmenter le pH de la phase liquide jusqu'à une valeur supérieure ou égale à 7 et de préférence supérieure à 12, l'azote contenu dans cette phase liquide se dégage sous forme d'ammoniac.

Comme expliqué ci-dessus, la Demanderesse a observé que l'azote ammoniacal piégé dans les boues G1 se solubilise ou se resolubilise dans la phase liquide H1 ce qui permet, en fonction du temps et/ou de la surface de contact des boues G1 avec la phase liquide H1 de contrôler la concentration en azote des boues G1 destinées à être épandues et valorisées en tant qu'engrais. En particulier, il est ainsi possible de contrôler le rapport azote/phosphore des boues G1.

La phase liquide H1 obtenue après décantation est soumise à un flux d'air en sorte de volatiliser sous forme d'ammoniac gazeux la plus grande part de l'azote minéralisable contenue.

L'ammoniac ainsi volatilisé est neutralisé par de l'acide sulfurique sous forme de sulfate d'ammonium qui peut être utilisé comme engrais.

Après volatilisation de l'ammoniac, la phase liquide H2 est mélangée à du chlorure de sodium et à de l'acide sulfurique en sorte d'amener son pH à une valeur préférentiellement comprise entre 8,5 inclus et 9,5. Dans une variante non représentée, on ajoute également du charbon actif pulvérulent afin de parfaire le traitement. Le mélange H3 ainsi obtenu est introduit dans une cellule d'électrofloculation. Eventuellement, le mélange peut être effectué dans la cellule d'électrofloculation elle-même.

L'étape d'électrofloculation a pour but notamment de précipiter les matières en suspension et les colloïdes sous forme de flocs, de précipiter le phosphore restant sous forme de phosphates et d'oxyder les matières organiques ce qui contribue à désodoriser et à éclaircir le mélange H3. De plus, sous l'action du courant électrique, lors de l'électrofloculation, le chlorure de sodium forme des hypochlorites qui présentent des propriétés bactéricides.

Après séparation des flocs F formés lors de l'électrofloculation, le mélange de la phase liquide D et des boues E éventuellement présentes est décanté et la phase liquide D représente l'effluent épuré.

En fonction de la teneur en potassium du lisier traité, cette eau peut être réutilisée soit pour abreuver les animaux, soit et c'est généralement le cas, la teneur en potassium étant trop importante, pour le nettoyage de l'installation elle-même ou d'un élevage porcin.

Les flocs F sumageants peuvent également si leur teneur en polluants le permet, être valorisés en tant qu'engrais du fait de leur forte concentration en azote.

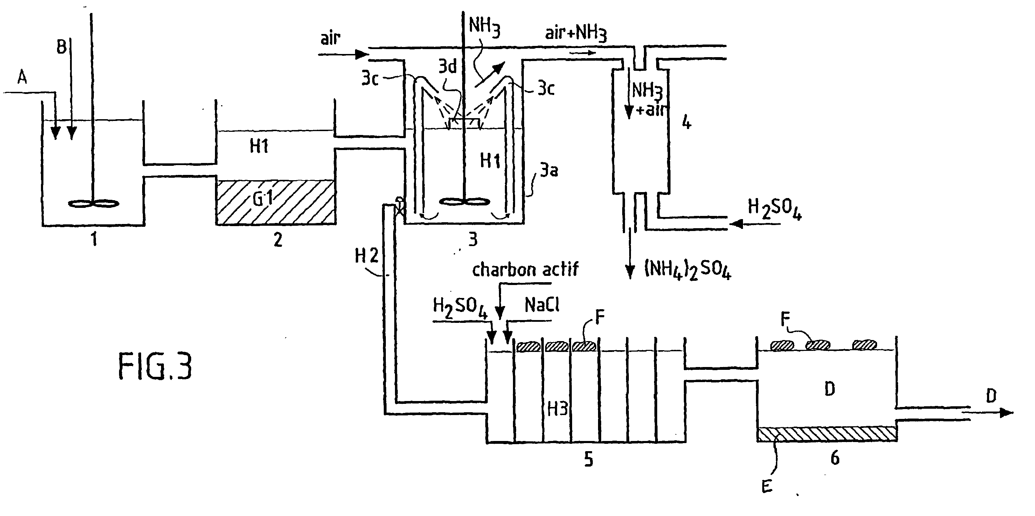

En référence à la figure 3, un exemple d'installation permettant la mise en oeuvre de la variante préférée de l'invention précédemment décrite va maintenant être décrit.

Cette installation comporte un mélangeur 1 dans lequel est réalisé le mélange de lisier A et de chaux B. Le mélange résultant est alors introduit dans un décanteur 2. La décantation peut être effectuée de manière statique ou dynamique, un agitateur tournant doucement pour accélérer la décantation des matières solides et des sels formés sous forme de boues G.

La phase liquide H1 est traitée par entraînement à l'air dans un dispositif approprié 3. Le dispositif d'entraînement à l'air 3 comporte une cuve 3a munie d'un agitateur 3b, de deux buses de pulvérisation 3c qui pulvérisent la phase liquide H1 présente au fond de la cuve 3a au niveau de la surface de la phase liquide H1 contenue dans la cuve 3a et d'un peigne 3d qui permet de casser la mousse formée à la surface du liquide H1. La Demanderesse a établi que la volatilisation de l'ammoniac est plus rapide par pulvérisation de la phase liquide H1 et passage d'un courant d'air au niveau du brouillard créé par pulvérisation que par simple passage d'un flux d'air à travers la phase liquide H1, c'est-à-dire du fond de la cuve 3a vers la surface du liquide H1.

L'ammoniac ainsi volatilisé est entraîné par un flux d'air arrivant de manière tangentielle à la surface de la phase liquide H1. Le mélange air-ammoniac est introduit dans une colonne de lavage 4 où circule à contre-courant une solution acide à base d'acide sulfurique. Lorsque la solution d'acide sulfurique est saturée en sulfate d'ammonium, elle est alors extraite de l'installation et stockée pour sa valorisation ultérieure. La solution de sulfate d'ammonium ainsi obtenue a une pureté suffisante pour être utilisée en tant que telle comme engrais. L'air ainsi traité est ensuite rejeté vers le milieu extérieur.

Après volatilisation de l'ammoniac, la solution résultante H2 est alors introduite après ajout d'acide sulfurique et de chlorure de sodium, dans une cellule d'électrofloculation 5 qui comporte quatre compartiments munis de six plaques en fer servant d'électrodes (anodes et cathodes) et alimentées électriquement sous une tension de 12V, l'intensité obtenue est alors de 50A. Dans le cas de l'utilisation d'électrodes en fer, le pH de la phase liquide H3 est ajusté entre 8,5 et 9,5 (de préférence à une valeur égale à 8,5) tel que précédemment décrit, ce qui assure le minimum de solubilité des hydroxydes de fer formés.

Les flocs F formés dans la cellule d'électrofloculation 5 sont ensuite séparés dans un second décanteur flottateur 6 qui sert avantageusement au stockage du mélange de la phase liquide D qui représente l'effluent épuré et des boues E éventuellement présentes en suspension. Le stockage permet la séparation par décantation des boues E de l'effluent épuré D. Il est également possible selon l'invention, de séparer les flocs F par décantation, ceux-ci se mélangent alors aux boues E ou par flottation-décantation.

L'installation de l'invention s'avère particulièrement intéressante en ce qu'elle peut permettre le traitement du lisier à proximité d'un élevage porcin. L'effluent épuré D étant de l'eau désinfectée peut servir au nettoyage des fosses destinées à recevoir le lisier. Il serait donc possible, selon l'invention de traiter régulièrement, de façon semi-continue le lisier produit évitant son accumulation et les dangers ainsi engendrés tout en permettant une valorisation maximale du lisier.

L'installation décrite ci-dessus est particulièrement adaptée à une mise en oeuvre en batch ou semi-continue du procédé de l'invention. Il est également possible, sans sortir du cadre de la présente invention de mettre en oeuvre le procédé de l'invention de manière continue.

De même, il est possible en utilisant un dispositif approprié d'effectuer la volatilisation de l'ammoniac sans décantation préalable des boues G1.

Le dispositif de mise en oeuvre du procédé de la présente invention peut être facilement conçu pour être compact et mobile.

Les tableaux suivants regroupent à titre d'exemple les compositions des différentes phases après les principales étapes de la variante préférée du procédé de l'invention précédemment décrite. Les tableaux II et III concernent le lisier brut A et le mélange homogénéisé lisier brut + chaux (A + B).

L'échantillon de lisier utilisé contenant une forte teneur en matières en suspension (80g/l environ), la quantité de phase liquide H1 obtenue fut insuffisante (92I) pour permettre le bon fonctionnement de l'installation de volatilisation de l'ammoniac par entraînement à l'air et de ce fait cette phase liquide H1 a dû être préalablement diluée. Cet exemple représente un cas extrême du type d'effluent qu'il est possible de traiter par le procédé de l'invention.

Le tableau VI regroupe les rendements d'épuration en %.

Les significations des diverses références sont reprises ci-dessous.
A : lisier brut ;
B : chaux ;
G1 : boues ;
H1 : phase liquide après séparation des boues G1;
H2 : phase liquide obtenue après volatilisation de l'ammoniac ;
H3 : mélange introduit dans la cuve d'électrofloculation ;
F : flocs ;
D + E : phase liquide et boues en suspension ;
D : effluent épuré.

**TABLEAU II**

| | matières sèches % | matières organiques % | matières minérales % |
|---|---|---|---|
| lisier brut A | 14,10 | 2,60 | 11,50 |
| matière sèche du lisier brut A | | 81,50 | 18,50 |

**TABLEAU III**

| | matières sèches % | matières organiques % | matières minérales % |
|---|---|---|---|
| mélange A + B homogénéisé | 36,85 | 27,00 | 9,85 |
| matière sèche du mélange A + B homogénéisé | | 73,30 | 26,70 |

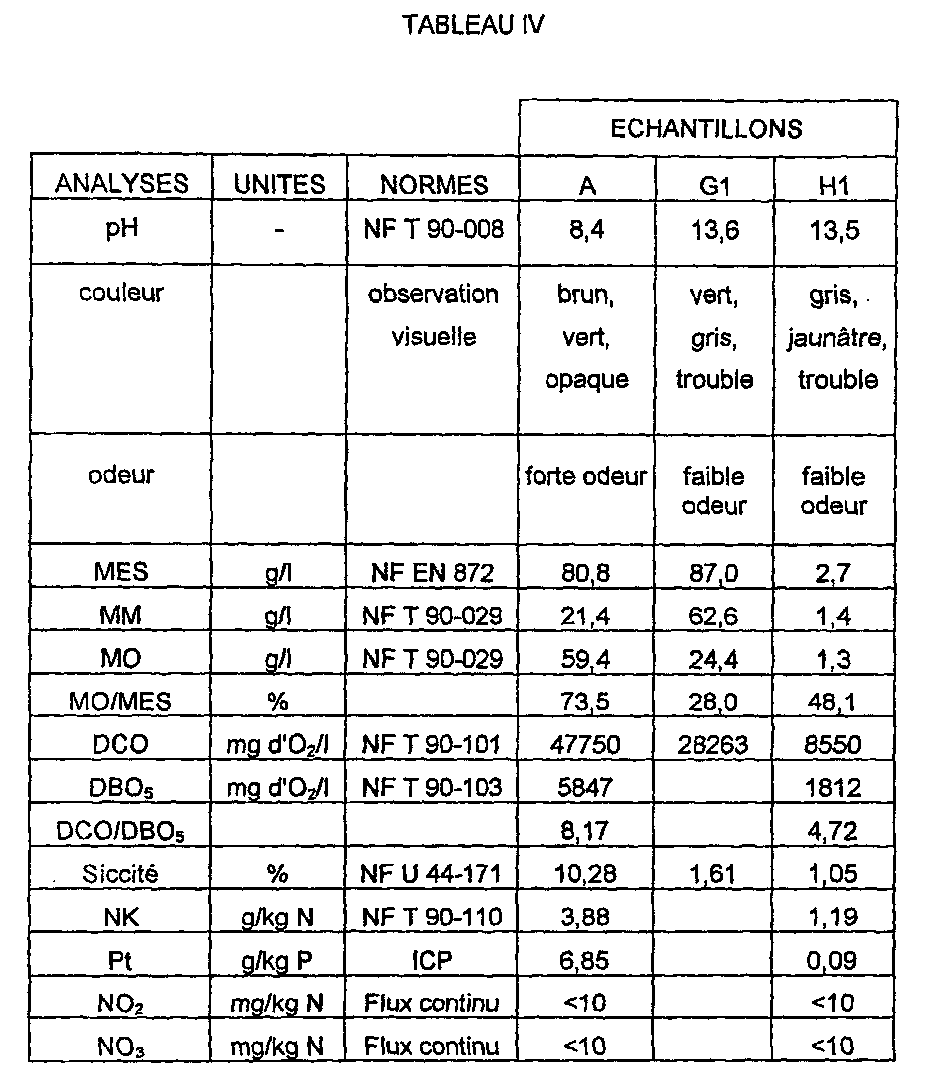

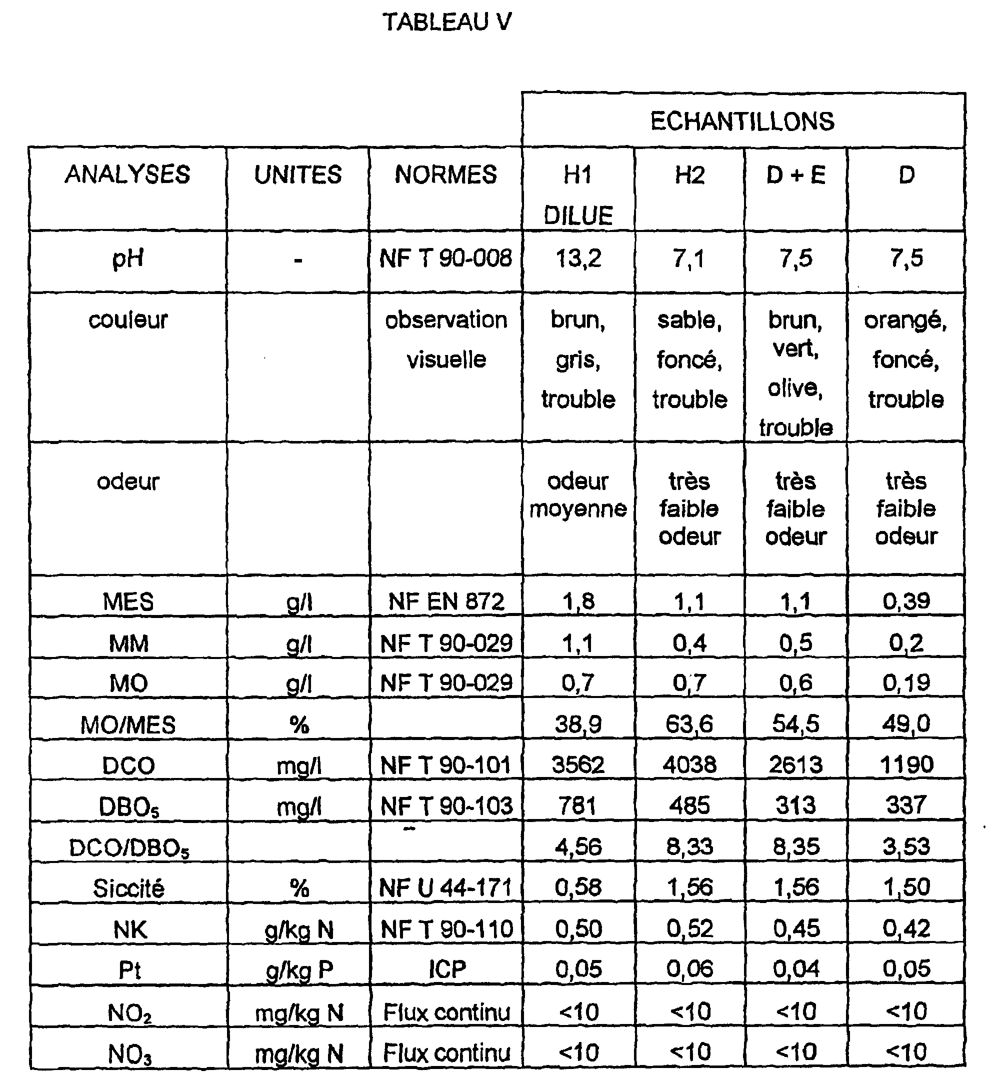

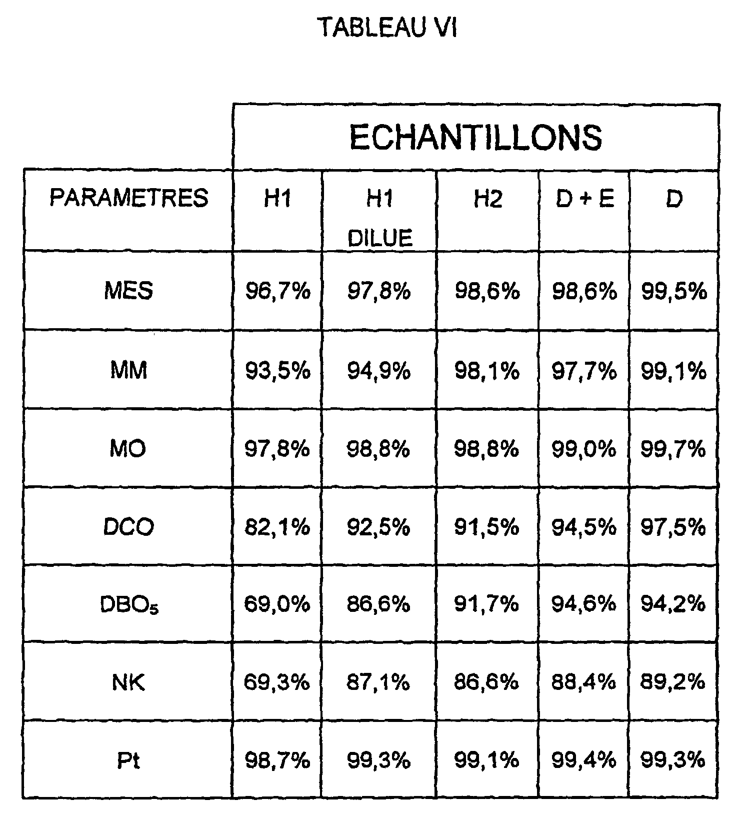

**TABLEAU VII**

| ECHANTILLONS | N-NH3 (g/l) | |
|---|---|---|
| A | 2,94 | |
| H1 (directement après mélange) | 1,4 | |
| H1 (après maturation) | 1,04 | |
| H1 dilué | 0,45 | |
| H2 | 0,39 | |
| D + E | 0,25 | |
| Les résultats du tableau VII correspondent à l'azote mesuré selon la méthode Nesler. | | |

Le terme de "maturation" correspond à une agitation du mélange pendant une durée d'environ 45 à 60 minutes.

Le tableau VIII suivant regroupe les résultats correspondant à la demande chimique en oxygène du lisier à divers étapes de son traitement. La phase liquide D obtenue après électrofloculation a été mélangée à du charbon actif pulvérulent (5 g/l). Il est possible, en traitant avant l'étape d'électrofloculation, la phase liquide H1 avec du charbon actif de baisser la DCO de 7000 à 720 mg/l (valeur mesurée à l'entrée de la cuve d'électrofloculation). Il est également possible dans le cadre de la présente invention, de mélanger la phase liquide H2 à du charbon actif pulvérulent dans la cuve d'électrofloculation 6. Il est à prévoir que la présence de charbon actif pulvérulent lors de l'électrofloculation améliorerait grandement les résultats obtenus tant du point de vue de la DCO que de l'azote ; le charbon actif permet en effet de capter les molécules azotées solubles.

Le lisier épuré D présente dans cet exemple particulier un pH, une odeur, une teneur en azote et en phosphore permettant son rejet dans le milieu naturel

**TABLEAU VIII**

| ECHANTILLONS | DCO (mg d'O₂/l) |
|---|---|
| A | 44000 |
| mélange A + B (homogénéisé) | 54000 |
| H1 (directement après mélange) | 18000 |
| H1 (mesuré après maturation) | 10000 |
| H1 dilué (1 heure de volatilisation) | 7000 |
| H3 | 640 |
| H3+ ajout de charbon actif | 250 |

Il est à noter que les résultats du procédé de l'invention dépendent de la composition de l'effluent à traiter. Ainsi, dans le cas d'un lisier relativement concentré, la Demanderesse a mis en évidence que les résultats obtenus étaient meilleurs après dilution du lisier, par exemple une dilution avec de l'eau courante de l'ordre de 40% en volume.

## Revendications

1. Procédé de traitement d'un effluent (A) contenant du phosphore et éventuellement de l'azote et/ou des matières organiques et/ou des métaux lourds **caractérisé en ce que** :
- on ajoute une base (B) en sorte notamment de précipiter au moins une partie du phosphore et éventuellement de volatiliser une partie de l'azote ammoniacal sous forme d'ammoniac gazeux et/ou de précipiter au moins une partie des matières organiques et/ou des métaux lourds.
- on fait subir une électrofloculation au mélange de l'effluent et de la base (A + B) ainsi obtenu dans une cellule d'électrofloculation équipée d'électrodes en fer ; et
- on sépare les flocs (F) formés lors de l'électrofloculation et les boues (E) éventuellement présentes de la phase liquide (D) qui constitue l'effluent épuré.

2. Procédé selon la revendication 1, **caractérisé en ce qu'**après ajout de ladite base (B) et avant la phase d'électrofloculation, on élimine les boues précipitées (G1) en sorte notamment de faciliter la volatilisation de l'azote ammoniacal.

3. Procédé selon l'une des revendications 1 à 2, **caractérisé en ce que** au moins une partie de l'ammoniac gazeux volatilisé est entraîné par un gaz, de préférence de l'air, et de préférence, après élimination des boues (G1) éventuellement formées après ajout de ladite base (B).

4. Procédé selon l'une des revendications 1 à 3, **caractérisé en ce que** l'entraînement de l'ammoniac est mis en oeuvre par pulvérisation du mélange de l'effluent (A) et de la base (B) ou de la phase liquide (H1) obtenue après séparation des boues (G1) éventuellement formées après ajout de ladite base (B).

5. Procédé selon l'une des revendications 1 à 4, **caractérisé en ce qu'**on casse les mousses formées lors de la phase de volatilisation de l'ammoniac gazeux.

6. Procédé selon l'une quelconque des revendications 1 à 5, **caractérisé en ce que** la base (B) est choisie parmi la chaux, la magnésie et un mélange de chaux et de magnésie.

7. Procédé selon l'une quelconque des revendications 1 à 6, **caractérisé en ce que** le pH dudit mélange a, après ajustage éventuel, une valeur supérieure ou égale à 8,5 et inférieure à 9,5.

8. Procédé selon l'une quelconque des revendications 1 à 7, **caractérisé en ce que** l'ammoniac volatilisé est neutralisé par un acide, de préférence, par l'acide sulfurique.

9. Procédé selon l'une quelconque des revendications 1 à 8, **caractérisé en ce qu'**on ajoute avant et/ou après et/ou lors de l'étape d'électrofloculation un agent adsorbant.

10. Procédé selon l'une quelconque des revendications 1 à 9, **caractérisé en ce qu'**on ajoute un sel, de préférence du chlorure de sodium, avant ou lors de l'étape d'électrofloculation.

11. Procédé selon l'une quelconque des revendications 1 à 10, **caractérisé en ce que** ledit effluent est un effluent d'élevage contenant notamment des excréments d'animaux.

12. Dispositif d'épuration d'un effluent (A) contenant du phosphore et éventuellement de l'azote et/ou des matières organiques et/ou des métaux lourds, **caractérisé en ce qu'**il comprend :
- un mélangeur (1) destiné au mélange dudit effluent (A) et d'une base (B) ;
- une cellule d'électrofloculation (5) équipée d'électrodes en fer ; et
- un dispositif de séparation (6) de la phase liquide (D) qui constitue l'effluent épuré des boues (E) éventuellement présentes et des flocs formés (F) dans ladite cellule d'électrofloculation (5).

13. Dispositif d'épuration d'un effluent (A) selon la revendication 12, **caractérisé en ce qu'**il comporte en outre,
- une colonne (4) d'absorption de l'ammoniac gazeux dégagé par le mélange dudit effluent (A) et d'une base (B).

14. Dispositif selon l'une des revendications 12 ou 13, **caractérisé en ce qu'**il comporte en outre :
- un décanteur (2) destiné à séparer les boues (G1 ) éventuellement présentes de la phase liquide (H1 ) qui est ensuite introduite dans la cellule d'électrofloculation (6).

15. Dispositif selon l'une quelconque des revendications 12 à 14, **caractérisé en ce qu'**il comprend en outre une installation d'entraînement (3) notamment à l'air des composés volatils notamment de l'ammoniac.

## Claims

1. Process for treating an effluent (A) containing phosphorus and possibly nitrogen and/or organic materials and/or heavy metals, **characterised in that**:
- a base (B) is added so as in particular to precipitate at least some of the phosphorus and possibly volatilise some of the ammoniacal nitrogen in the form of gaseous ammonia and/or precipitate some of the organic materials and/or some of the heavy metals.
- the mixture of the effluent and the base (A + B) thus obtained is subjected to electroflocculation in an electroflocculation chamber fitted with iron electrodes; and
- the flocs (F) formed during the electro flocculation and any sludge present from the liquid phase (D) which constitutes the purified effluent, are separated.

2. Process according to Claim 1, **characterised in that** after the said base (B) is added and before the electroflocculation phase, the precipitated sludge (G1) is eliminated in order in particular to facilitate volatilisation of the ammoniacal nitrogen.

3. Process according to one of the Claims 1 to 2, **characterised in that** at least some of the volatilised gaseous ammonia is carried away by a gas, preferably air, and preferably, after elimination of the sludge (G1) possibly formed after adding the said base (B).

4. Process according to one of the Claims 1 to 3, **characterised in that** the ammonia is carried away by spraying the mixture of the effluent (A) and the base (B) or the liquid phase (H1) obtained after separating the sludge (G1) possibly formed after adding the said base (B).

5. Process according to one of the claims 1 to 4, **characterised in that** the foam formed at the time of the gaseous ammonia volatilisation phase is broken up.

6. Process according to any one of the Claims 1 to 5, **characterised in that** the base (B) is chosen from among lime, magnesia and a mixture of lime and magnesia.

7. Process according to any one of the Claims 1 to 6, **characterised in that** the pH figure of the said mixture, after possible adjustment, is higher than or equal to 8.5 and below 9.5.

8. Process according to any one of the Claims 1 to 7, **characterised in that** the volatilised ammonia is neutralised by an acid, preferably by sulphuric acid.

9. Process according to any one of the Claims 1 to 8, **characterised in that** an absorbent agent is added before and/or after and/or at the time of the electroflocculation stage.

10. Process according to any one of the Claims 1 to 9, **characterised in that** a salt is added, preferably sodium chloride, before or at the time of the electroflocculation stage.

11. Process according to any one of the Claims 1 to 10, **characterised in that** the said effluent is a breeding effluent containing in particular animal excrement.

12. Device for purifying an effluent (A) containing phosphorus and possibly nitrogen and/or organic materials and/or heavy metals, **characterised in that** it comprises:
- a mixer (1) designed to mix the said effluent (A) and a base (B);
- an electroflocculation chamber (5) fitted with iron electrodes; and
- a device (6) for separating the liquid phase (D) which constitutes the purified effluent from the sludge (E) possibly present and from the flocs (F) formed in the said electroflocculation chamber (5).

13. Device for purifying an effluent (A) according to Claim 12, **characterised in that** in addition it has:
- a column (4) for absorption of the gaseous ammonia given off by the mixture of the said effluent (A) and a base (B).

14. Device according to one of the Claims 12 or 13, **characterised in that** it has in addition:
- a settling vessel (2) designed to separate the sludge (G1) possibly present from the liquid phase (H1) which is then put into the electroflocculation chamber (6).

15. Device according to any one of the Claims 12 to 14, **characterised in that** it also includes an installation (3) particularly for carrying away volatile compounds, particularly volatile ammonia compounds, to the air.

## Patentansprüche

1. Verfahren zur Behandlung eines Abfall-Stroms (A), der Phosphor sowie gegebenenfalls Stickstoff und/oder organische Materialien und/oder Schwermetalle enthält, **dadurch gekennzeichnet, dass** man:
- eine Base (B) zugibt, um insbesondere mindestens einen Teil des Phosphors auszufällen und gegebenenfalls einen Teil des ammoniakalischen Stickstoffs in Form von gasförmigem Ammoniak zu verflüchtigen und/oder mindestens einen Teil der organischen Materialien und/oder der Schwermetalle auszufällen;
- die so erhaltene Mischung aus dem Abfall-Strom und der Base (A + B) in einer mit Eisenelektroden ausgestatteten Elektroausflockungs-Zelle einer Elektroflockung unterwirft; und
- die bei der Elektroflockung gebildeten Flocken (F) und die gegebenenfalls in der flüssigen Phase (D), die den gereinigten Abfall-Strom darstellt, enthaltenen Schlämme (E) abtrennt.

2. Verfahren nach Anspruch 1, **dadurch gekennzeichnet, dass** man nach der Base (B) und vor der Elektroausflockungsphase die ausgefällten Schlämme (G1) eliminiert, um insbesondere die Verflüchtigung von ammoniakalischem Stickstoff zu erleichtern.

3. Verfahren nach einem der Ansprüche 1 bis 2, **dadurch gekennzeichnet, dass** mindestens ein Teil des verflüchtigten gasförmigen Ammoniaks von einem Gas, vorzugsweise Luft, und vorzugsweise nach der Eliminierung der Schlämme (G1), die sich gegebenenfalls nach der Zugabe der Base (B) gebildet haben, ausgeschleppt wird.

4. Verfahren nach einem der Ansprüche 1 bis 3, **dadurch gekennzeichnet, dass** das Ausschleppen von Ammoniak durchgeführt wird durch Zerstäubung der Mischung aus dem Abfall-Abstrom (A) und der Base (B) oder der flüssigen Phase (H1), die nach der Abtrennung der Schlämme (G1), die gegebenenfalls nach der Zugabe der Base (B) gebildet worden sind, erhalten worden ist.

5. Verfahren nach einem der Ansprüche 1 bis 4, **dadurch gekennzeichnet, dass** man die in der Phase der Verflüchtigung von gasförmigem Ammoniak gebildeten Schäume bricht.

6. Verfahren nach einem der Ansprüche 1 bis 5, **dadurch gekennzeichnet, dass** die Base (B) ausgewählt wird aus der Gruppe Kalk, Magnesiumoxid und einer Kalk/Magnesiumoxid-Mischung.

7. Verfahren nach einem der Ansprüche 1 bis 6, **dadurch gekennzeichnet, dass** der pH-Wert der Mischung nach einer eventuellen Einstellung einen Wert von ≥ 8,5 und < 9,5 hat.

8. Verfahren nach einem der Ansprüche 1 bis 7, **dadurch gekennzeichnet, dass** das Ammoniak, das sich verflüchtigt hat, durch eine Säure, vorzugsweise Schwefelsäure, neutralisiert wird.

9. Verfahren nach einem der Ansprüche 1 bis 8, **dadurch gekennzeichnet, dass** man vor und/oder nach und/oder während der Durchführung der Elektroausflockungsstufe ein Adsorbens zugibt.

10. Verfahren nach einem der Ansprüche 1 bis 9, **dadurch gekennzeichnet, dass** man vor oder während der Elektroausflockungsstufe ein Salz, vorzugsweise Natriumchlorid, zugibt.

11. Verfahren nach einem der Ansprüche 1 bis 10, **dadurch gekennzeichnet, dass** der Abfall-Strom ein Abfall-Strom aus der Tierzucht ist, der insbesondere Tierexkremente enthält.

12. Vorrichtung zur Reinigung eines Abfall-Stroms (A) der Phosphor und gegebenenfalls Stickstoff und/oder organische Materialien und/oder Schwermetalle enthält, **dadurch gekennzeichnet, dass** sie umfasst:
- einen Mischer (1) zum Vermischen des Abfall-Stroms (A) mit einer Base (B);
- eine Elektroausflockungszelle (5), die mit Eisenelektroden ausgestattet ist; und
- eine Einrichtung (6) zur Abtrennung der Schlämme (E), die gegebenenfalls vorhanden sind, und der Flocken (F), die gegebenenfalls in der Elektroausflockungszelle (5) gebildet worden sind, von der flüssigen Phase (D), die den gereinigten Abfall-Strom darstellt.

13. Vorrichtung zur Reinigung eines Abfall-Stroms (A) nach Anspruch 12, **dadurch gekennzeichnet, dass** sie außerdem umfasst:
- eine Kolonne (4) zur Absorption von gasförmigem Ammoniak, das aus der Mischung aus dem Abfallstrom (A) und einer Base (B) freigesetzt worden ist.

14. Vorrichtung nach einem der Ansprüche 12 oder 13, **dadurch gekennzeichnet, dass** sie außerdem umfasst:
- einen Dekanter (12) zur Abtrennung der Schlämme (G1), die gegebenenfalls vorhanden sind, von der flüssigen Phase (H1), die anschließend in die Elektroausflockungszelle (6) eingeführt wird.

15. Vorrichtung nach einem der Ansprüche 12 bis 14, **dadurch gekennzeichnet, dass** sie außerdem eine Einrichtung (3) zum Ausschleppen von flüchtigen Verbindungen, insbesondere von Ammoniak, insbesondere mittels Luft, umfasst.
